# EUROPEAN PATENT APPLICATION

(11) **EP 4 462 646 A1**
(43) Date of publication of application: **13.11.2024**
(21) Application number: 23172421.2
(22) Date of filing: 09.05.2023
(51) Int. Cl.: H02K 1/16, H02K 5/128, H02K 9/197, H02K 15/02, H02K 15/06

(54) **METHOD OF MANUFACTURING A STATOR AND A STATOR FOR AN ELECTRICAL MACHINE**

(71) Applicant: Rolls-Royce Deutschland Ltd & Co KG, 15827 Blankenfelde-Mahlow (DE)
(72) Inventor: FURUHAUG, Roar, 7041 Trondheim (NO)

(57) **Abstract**

According to an embodiment of the invention, a method of manufacturing a stator (10) for an electrical machine (100) is provided. The method includes providing (S100) a stator tube (20) defining a central axis (c) and including a first side (21) and a second side (22) axially displaced from each other. The method further includes the step of mechanically coupling (S200) each of a plurality of stator teeth (30) to an outer surface (23) of the stator tube (20) along a circumference (24) of the stator tube (20), wherein each of the stator teeth (30) extends from the first side (21) to the second side (22) of the stator tube (20) to define stator slots (38) between each neighboring stator teeth (30) that are outwardly open. Further, the method involves an installing (S300), from the outside, a winding coil arrangement (50) along the circumference (24) of the stator tube (20) and support the winding coil arrangement (50) by the stator slots (38) formed between the mechanically coupled stator teeth (30) on the outer surface (23) of the stator tube (20). In another step, the method involves mechanically coupling (S400) a stator back yoke (60) with the plurality of stator teeth (30) to surround the stator tube (20) and to enclose the winding coil arrangement (50).

## Description

### Field of the Disclosure

The present disclosure relates to a method of manufacturing a stator, a stator for an electrical machine and a corresponding electrical machine. In another aspect, the invention refers to an aircraft including the electrical machine.

### Technological Background

Electrical machines can generate a rotary motion of a rotor from a supplied electrical power or can generate electrical power using a supplied rotary motion depending on the mode of operation. The electrical machines include a stator and a rotor, wherein the rotor can rotate relative to the stator while the stator is immobilized.

When the electrical machine is operated as a motor, the stator receives an electrical power to generate a rotating magnetic field. In such case, the rotating magnetic field interacts with the rotor and causes the rotor to perform a rotating motion that is transferable to a mechanically coupled shaft to provide a rotation motion to a consumer based on the input electrical power. When the electrical machine is operated as a generator, a rotating motion of the rotor causes a voltage and/or a current which can be provided to an electric power consumer based on the input kinetic (rotation) energy.

The stator mechanically supports one or more coil windings which produce the rotating magnetic field or generate the electrical power depending on the mode of operation of the electrical machine.

It is desirable to have a thin-walled stator tube to optimize power density and machine performance. Since, however, the stator tube is exposed to external coolant pressure, the stator tube is prone to buckling which may at least result in operational imbalance or even worse in operational failure. To resist the risk of buckling the material choice of the stator tube is limited to materials having a relatively high stiffness thereby usually using reinforcing fibres that strengthen the stator tube.

Apart from the above problems related to buckling, winding coil installation is rather complicated when the stator slots are open to the central axis of the stator tube which usually has to be done done manually. This is the result of limited space available in the interior of a stator tube and the problem of limited space amplifies when using increasingly complex winding arrangements that need to be installed to provide higher power efficiency and a more reliable operation.

The present invention provides a method of manufacturing of a stator, a stator and an electrical machine including the stator which solves at least some of the above-mentioned problems. In addition, further technical problems in the above context are solved which becomes apparent from the following description.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a method of manufacturing a stator for an electrical machine is provided. The method comprises the steps of providing a stator tube defining a central axis and including a first side and a second side axially displaced from each other. The method further includes mechanically coupling a plurality of stator teeth to an outer surface of the stator tube along a circumference of the stator tube, wherein each of the stator teeth extends from the first side to the second side of the stator tube to define stator slots between each neighboring stator teeth that are open to the outside. The method further comprises installing, from the outside, a winding coil arrangement along the circumference of the stator tube and support the winding coil arrangement by the stator slots formed between the mechanically coupled stator teeth on the outer surface of the stator tube. Further, the method includes mechanically coupling a stator back yoke with the plurality of stator teeth to coaxially surround the stator tube and to enclose the winding coil arrangement.

According to another aspect of the present disclosure, a stator for an electrical machine is provided which comprises a stator tube defining a central axis and including a first side and a second side axially displaced from each other. The stator includes a plurality of stator teeth, each of the stator teeth mechanically coupled to an outer surface of the stator tube along a circumference of the stator tube, wherein each of the stator teeth extends from the first side to the second side of the stator tube to provide stator slots between each neighboring stator teeth. The stator further includes a winding coil arrangement wound along the circumference of the stator tube and supported by stator slots formed between the stator teeth on the outer surface of the stator tube. The method further comprises a stator back yoke mechanically coupled with the stator teeth to surround the stator tube and to enclose the winding coil arrangement.

Yet another aspect of the present disclosure refers to an electrical machine including the stator and an aircraft including the electrical machine.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic method of manufacturing a stator,
- Fig. 2: illustrates a method of manufacturing a stator according to an embodiment,
- Fig. 3: illustrates a front view of a stator according to an embodiment,
- Fig. 4: illustrates a coupling between stator back yoke and stator teeth from an axial view perspective, and
- Fig. 5: illustrates a coupling between stator teeth and stator stube from an axial view perspective.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, A method of manufacturing a stator is provided. The method includes the step of providing a stator tube with a central axis and including a first side and a second side axially distanced from each other. The method includes the step of individually mechanically coupling a plurality of stator teeth to an outer surface of the stator tube along a circumference of the stator tube. Each of the stator teeth extends, when coupled, from the first side to the second side of the stator tube to provide stator slots between each neighboring stator teeth that are outwardly open. The method further comprises installing, from the outside or from the outside/exterior direction, a winding coil arrangement along the circumference of the stator tube and support the winding coil arrangement by the stator slots formed between the mechanically coupled stator teeth on the outer surface of the stator tube. Further, the method includes the step of mechanically coupling a stator back yoke with the plurality of stator teeth to surround the stator tube and to enclose the winding coil arrangement.

A winding coil arrangement may include a plurality of wave winding coils. A wave winding coil includes a continuous, or uniform, conductor that is wound around the circumference of the stator tube. Each wave winding coil may correspond to a magnetic pole in operation. The wave winding coils refer to flexible conductors which can be bend and/or twisted at the front side and/or the back side of the stator tube to allow windings for forming a wave winding arrangement. At each side of the stator tube windings may be formed to provide the different turns. The overhangs may be referred to as windings. Each of the wave winding coils include insulation so that different wave winding coils are electrically insulated from one another even if overlayed on top of each other. The wave winding coils may each include multiple conductors in a Lutz wire arrangement to increase electric current transport. The number of stator slots may be 36 but any other number may be provided. The number of wave windings coils may be 18 but any other number may be provided.

The advantage of the above method is that buckling of the stator is prevented. This is achieved since each of the stator teeth are individually mechanically coupled to the stator tube so to be affixed to the stator tube. This has the further advantage of that the wall thickness of the stator tube wall can be made less thick thereby improving power density and further reducing weight. In addition, since the back yoke is coupled after the winding coil arrangement is completed, the wave winding coil arrangement can be installed from the outside. This has the effect of an easier winding installation. Such a winding installation can for example be automized/robotized instead of be performed manually which is not possible or at least very difficult for a winding installation to be performed from the inside. Since buckling cannot occur, it is also possible to extend the material classes used for the stator tube. For example, polymers without additional reinforcement fibers may be used instead of the generally required reinforced polymers as required in the prior art.

According to an embodiment, the stator tube includes a plurality of coupling grooves along the circumference of the stator tube, wherein each coupling groove extends in the axial direction between the first side and the second side. The coupling grooves are provided on the outer surface of the stator tube. Each of the stator teeth further includes a coupling tail at a bottom portion of the stator tooth which extends in the lengthwise direction of the stator tooth. The step of mechanically coupling of the stator teeth to the outer surface of the stator tube includes sliding of each of the stator teeth along the axial direction while the coupling tail fits in a corresponding coupling groove during the sliding until the stator teeth extend from the first side to the second side of the stator tube. Fitting here may refer to slotting with correspond shapes. The coupling tail may include a laterally extending or widening portion. In particular, the coupling tail may include a trapezoidal shape when viewed in axial direction. The coupling groove may include a corresponding shape, for example a corresponding trapezoidal shape to receive or to fit the coupling tail therein. The coupling groove may be in other words an axially extending coupling socket. The coupling may be referred to as a dovetail coupling. In this way as described above, a stable fixation of the stator teeth may be provided thereby individually locking the stator teeth to the outer surface of the stator tube without the need for additional fixation means. Only in additional embodiments, further glue may be used to fixate the stator teeth in place. Due to the fitting of axially extending coupling tail and coupling groove over the axial length, a friction coupling is provided after the sliding is completed securing the stator teeth at the outer surface.

According to an embodiment, each of the coupling grooves include a stoppage protrusion at a groove end. This may facilitate that all of the stator teeth may have the same axial position after the sliding. The stoppage protrusion may ease to perform the sliding as the axial displacement in the sliding can be performed until the stator tooth rests at the stoppage protrusion. A protruding of a stator tooth can be prevented in this manner which improves axial alignment of the plurality of stator teeth.

According to an embodiment, the stator back yoke includes a plurality of coupling protrusions along a circumference of the stator back yoke protruding to a central axis of the stator back yoke and extending in axial direction of the stator back yoke. The mechanical coupling includes a sliding of the stator back yoke in axial direction while the coupling protrusions are overlapping, i.e. aligned with, the stator slots formed between the stator teeth in the sliding until the stator back yoke surrounds the stator teeth or surrounds the stator tube. The coupling protrusion may be in other words a coupling tail. Thus, the stator slots can be used as guidance like a rail or track to move/slide the back yoke over the stator tube in an aligned manner.

According to an embodiment, each of the stator teeth include an indented coupling groove on both side surfaces of a top portion of each stator tooth extending in axial direction, wherein the mechanical coupling includes fitting the coupling protrusion in indented coupling grooves of two neighboring stator teeth during a sliding motion in axial direction until the stator back yoke surrounds the stator teeth or surrounds the stator tube. The coupling protrusions may include a laterally extending widening portion. In particular, the coupling protrusions may include a trapezoidal shape when viewed in axial direction. The indented coupling groove may include a corresponding shape to receive or to fit the coupling protrusion therein. The coupling may be in other words a dovetail coupling or sliding dovetail joint. In this way as described above, a stable fixation of the stator back yoke may be provided by the plurality of stator teeth, wherein each of the coupling protrusions is supported and fits by two teeth and the grooves therein. Thus, an interlocking of the stator back yoke to the stator teeth is achieved. Due to the fitting of coupling protrusions and indented coupling grooves, a friction coupling is provided along the axial length after the sliding is completed to safely secure the stator back yoke on the plurality of stator teeth. In embodiments, additional glue may be used, but in other embodiments no additional glue may be used. Thus, an effective and stable coupling of the stator back yoke is achieved.

According to an embodiment, the method includes a step of cooling the stator back yoke before mechanically coupling the stator back yoke with the plurality of stator teeth. The prior cooling may result in that the stator back yoke may have higher tolerances when being slid on the stator teeth and therefore eases the mechanical coupling process. Further, when being in the locking position and during the process of thermal equilibration, the prior cooling may lead to an additional coupling force/tension of the stator yoke due to thermal expansion while in coupled state on the stator teeth to improve the coupling strength.

According to an embodiment, the method may include the step of removing the stator tube after mechanically coupling of the stator back yoke to the plurality of stator teeth by sliding the stator tube in axial direction. In this embodiment, the stator tube only acts as an auxiliary tube to fixate the stator teeth and once the stator back yoke is coupled, it may be removed. In this way, a stator with open stator slots to the interior and with reduced weight is provided.

According to another aspect of the disclosure, a stator for an electrical machine is provided. The stator includes a stator tube defining a central axis and including a first side and a second side axially distanced from each other. The stator includes a plurality of stator teeth. Each of the plurality of stator teeth is mechanically coupled to an outer surface of the stator tube along a circumference of the stator tube. Each of the stator teeth extends from the first side to the second side of the stator tube to provide stator slots between each neighboring stator teeth. In addition, a winding coil arrangement is wound along the circumference of the stator tube and supported by the stator slots formed between the stator teeth on the outer surface of the stator tube. In addition, a stator back yoke is mechanically coupled with the stator teeth to coaxially surround the stator tube and to enclose the winding coil arrangement.

The advantage of the above stator is that buckling is prevented since the stator teeth are each mechanically coupled to the stator tube so that buckling cannot take place. A resulting advantage is that the wall thickness of the stator tube can be made less thick thereby enabling higher power density. In addition thereto, since the back yoke can be coupled after the winding coil arrangement is installed, the installation can be performed from the outside which allows an easier winding installation. Such winding installation can for example be automized/robotized instead of performed manually which is not possible for a winding installation which is performed from the inside. Further, since buckling is eliminated, the usable material class is larger. For example, polymers without additional reinforcement fibers may be used compared to reinforced polymers as used in the prior art.

According to an embodiment, the stator tube includes a plurality of coupling grooves along a circumference of the stator tube, wherein each coupling groove extends in the axial direction from the first side to the second side. Each of the stator teeth includes a coupling tail at a bottom portion of the stator teeth extending in the axial direction. The coupling tail of each stator tooth is mechanically fits with a corresponding coupling groove. In this way as described above, a stable fixation of the stator teeth may be provided thereby individually locking the stator teeth to the outer surface of the stator tube. Due to the fitting of axially extending coupling tail and coupling groove over the entire axial length, a stable friction coupling is provided for securing the stator teeth at the outer surface. No additional fixation elements are needed.

According to an embodiment, the coupling tail includes a widening portion and the coupling groove includes a widening portion towards the central axis which mechanically fits to or interlocks with each other. The widening portion may include a steady widening or a stepwise widening. For example, the widening portion may have a trapezoidal shape. In this way, an upper retention edge is provided which secures the stator teeth at the outer surface of the stator tube.

According to an embodiment, each of the coupling grooves include a stoppage protrusion at a groove end. This enables that all of the stator teeth may have the same axial position after the sliding. The stoppage protrusion may ease to perform the sliding as the axial displacement in the sliding can be performed until the stator tooth rests at the stoppage protrusion. A protruding of a stator tooth can be prevented in this manner improve axial alignment of the plurality of stator teeth.

According to an embodiment, the stator back yoke includes a plurality of coupling protrusions protruding to a central axis of the stator back yoke along a circumference of the stator back yoke, wherein the coupling protrusions overlap and/or are partially received by the stator slots formed between the stator teeth. The coupling protrusion may be in other words a coupling tail. Thus, the free space of the stator slots is used for the coupling protrusions to be at least partially seated therein which may ease the coupling process and the alignment of the back yoke and the plurality of stator teeth.

According to an embodiment, each of the stator teeth include an indented coupling groove on both side surfaces of a top portion of each stator tooth extending in axial direction, wherein each coupling protrusion mechanically interlocks with indented coupling grooves of two neighboring stator teeth. The coupling protrusions may include widening portion. For example, the coupling protrusions may include a trapezoidal shape when viewed in axial direction. The indented coupling groove may include a corresponding shape to mechanically interlock the coupling protrusion therein. The coupling may be in other words a dovetail coupling. In this way as described above, a stable fixation of the stator back yoke may be provided by the plurality of stator teeth, wherein each of the coupling protrusions is supported and fits by two teeth and the grooves therein. Thus, a locking of the stator back yoke to the stator teeth is achieved. Due to the fitting of coupling protrusions and indented coupling grooves, a friction coupling is provided after the sliding is completed for securing the stator back yoke on the plurality of stator teeth. Thus, an effective and stable coupling of the stator back yoke is achieved.

According to an embodiment, the winding coil arrangement includes a plurality of connectors which lead out from an outer diameter of the wave winding coil arrangement. Thus, since the wave winding arrangement is provided from the outside, the connectors can be provided from an outer diameter and not from an inner diameter compared to when the wave winding coil is installed from the inside. Thus, a more space efficient lead out arrangement can be provided with reduced axial space requirements.

According to an embodiment, the stator tube includes a conical tip portion which tapers in axial direction. At least one winding layer of the winding coil arrangement may be supported by the conical tip portion and the internal space around the central axis is secured. The conical tip portion can thus provide a support for the at least one windings or winding layers formed in the process of installing the winding coil arrangement.

According to an embodiment, an electrical machine including a stator according to embodiments of the present application is provided. The electrical machine according to the embodiments of the stator may have higher power density due to thinner stator tube wall since the risk of buckling is eliminated due to the mechanical coupling of the stator teeth to the outer surface of the stator tube. Further advantages can be derived directly from the advantages of the stator.

In addition, an aircraft comprising the electric machine is provided. In particular for aircrafts the above advantages are important for improving weight as well as safety and reliability of operation.

### Specific Embodiments

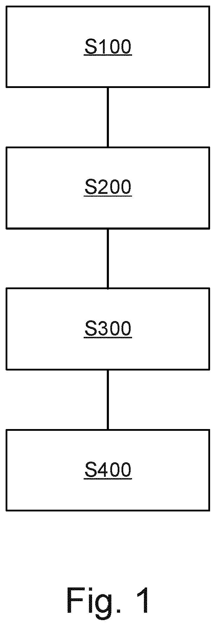

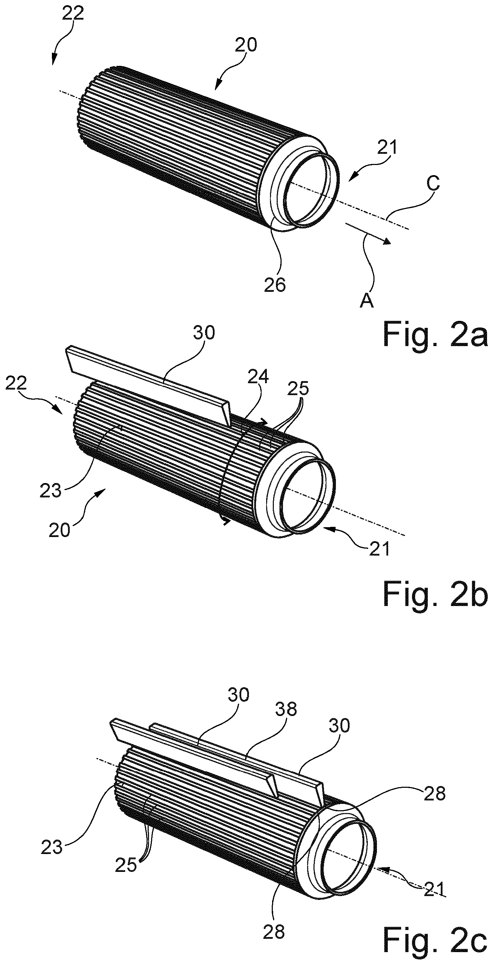

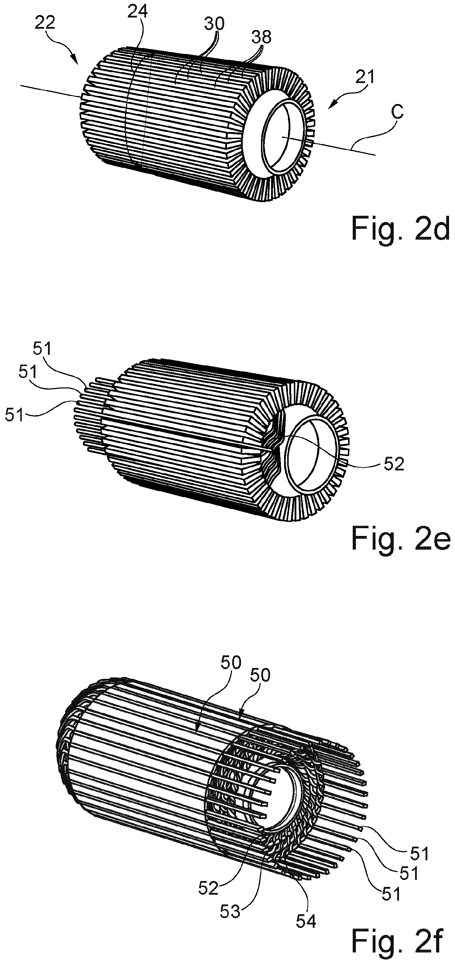

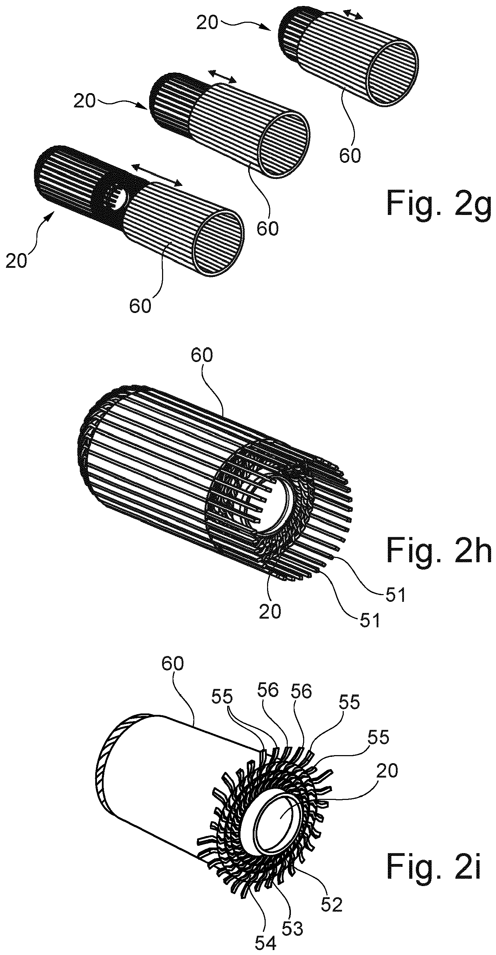

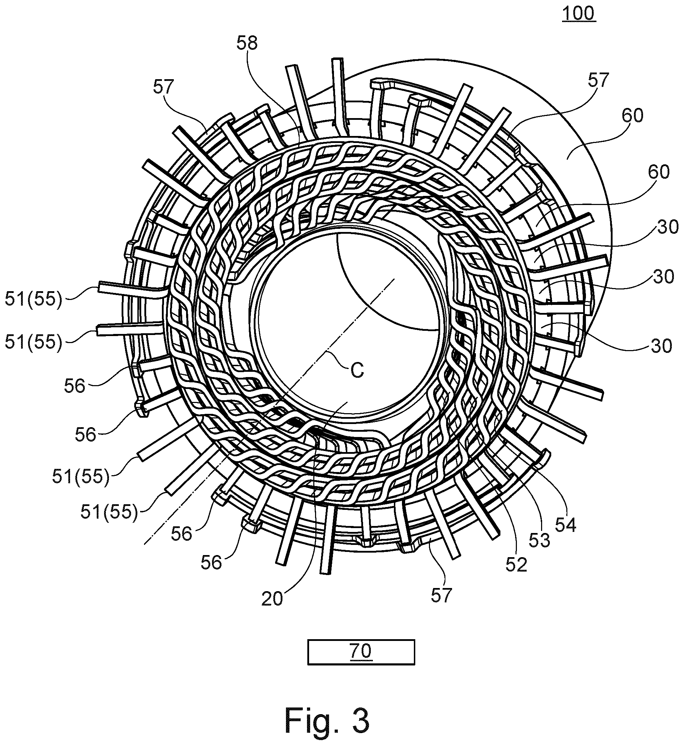

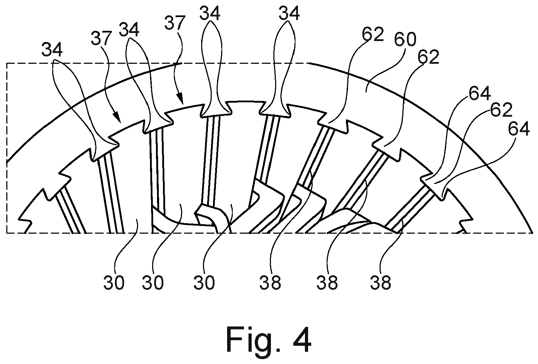

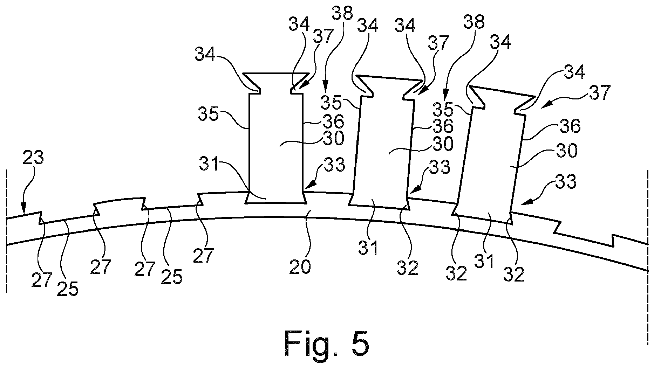

Fig. 1 provides a schematic illustration of a method of manufacturing a stator 10 for an electrical machine 100. In Fig. 2, manufacturing steps according to embodiments are illustrated in further details. Fig. 3 illustrates a stator 10 according to an embodiment of the invention. Figs. 4 and 5 illustrate coupling interfaces from an axial view between the stator back yoke 60 and the stator teeth 30 as well as between the stator teeth 30 and the stator tube 20, respectively.

According to Figs. 1 and 2, a method of manufacturing of a stator 10 for an electrical machine 100 is disclosed. The method includes the step of providing S100 a stator tube 20. The stator tube 20 defines a central axis C and includes a first side 21 and a second side 22 axially displaced from each other. An example of a stator tube 20 is shown in Figs. 2 (a) - (c).

The method includes the step of mechanically coupling S200 each of a plurality of stator teeth 30 to an outer surface 23 of the stator tube 20 along a circumference 24 of the stator tube 20. The coupling process is illustrated in the Figs. 2 (b) - (d) according to preferred embodiments.

The stator teeth 30 can be individually, i.e., one by one, mechanically coupled onto the outer surface 23 of the stator tube 20. Referring to Fig. 2 (c), the first stator tooth 30 is already mechanically fixed on the outer surface 23 of the stator tube 20 while the second stator tooth 30 is in the process of being mechanically coupled on the outer surface 23 next to the first stator tooth 30. The method is repeated until the circumference 24 of the outer surface 23 is filled with the desired amount of stator teeth 30. In the present case, as example, the process of mechanically coupling stator teeth 30 to the surface 23 is repeated until 36 stator teeth 30 are coupled to the outer surface 23 as can be seen in Fig. 2 (d).

Each of the stator teeth 30, once mechanically coupled, extend from the first side 21 to the second side 22 of the stator tube 20 to provide stator slots 38 between each neighboring stator teeth 30. The stator slots 38 formed between neighboring stator teeth 30 are for example illustrated in Fig. 2 (d). The stator slots 38 are outwardly open. Due to the circular arrangement, the number of stator slots 38 equals the number of stator teeth 30, i.e., in the present example, there is 36 stator slots 38 provided in total. However, the present disclosure is not restricted thereto and a different number of stator slots/teeth 30, 38 may be provided.

According to an embodiment, as can be seen in Fig. 2 (a) - (c) as well as in Fig. 5, the stator tube 20 includes a plurality of coupling grooves 25 along the circumference 24 of the stator tube 20. Each of these coupling grooves 25 extend in axial direction A between the first side 21 and the second side 22.

Furthermore, as can be seen in Fig. 5, each of the stator teeth 30 include a coupling tail 31 at a bottom portion 33 of the stator tooth 30. The coupling tail 31 further extends in the axial direction A or in in other words in the lengthwise direction of the stator tooth 30.

The step of mechanically coupling S200, as demonstrated in Figs. 2 (a) - 2 (d), of the stator teeth 30 to the outer surface 23 of the stator tube 20 includes a sliding of each of the stator teeth 30 along the axial direction A while the coupling tail 31 mechanically fits into a corresponding coupling groove 25 during the sliding. Thus, in this manner, due to sliding motion while fitting of the coupling tail 31 in the coupling groove 25, a mechanical fixation or interlocking is provided. The shape of the coupling tail 31 may include a widening portion 32 which widens toward the central axis C. The shape may trapezoidal. The coupling groove 25 may have a matching shape to receive or to fit the coupling tail 31 therein. That is, also the coupling groove 25 may include a widening portion 27 which widens toward the central axis C. Thus, a tight, by friction, interlocking of the stator teeth 30 in the respective coupling grooves 25 is provided which requires no additional fixation means.

The coupling grooves 25 can include a stoppage protrusion 28 at a groove end as indicated in Fig. 2 (a) and 2 (c). The stoppage protrusions 28 may be provided along the circumference 24 of the stator tube 20 as a common stoppage to define a common axial locking position. Thus, the sliding can be performed until the stator tooth 30 rests at the stoppage protrusion 28. This way the axial position of the stator tooth 30 in the rested position can be better aligned.

Once the stator teeth 30 are coupled to the outer surface 23 of the stator tube 20, the method includes the step of installing S300, from the outside, a winding coil arrangement 50 along the circumference 24 of the stator tube 20, which is illustrated in Fig. 2 (e) and Fig. 2 (d). Since the stator slots 38 are open to the outside, the winding installation is simplified and can be performed in an automated manner.

For example, in Fig. 2 (e), a first set of wave winding coils 51 is supported by a subset of stator slots 38 including a first primary winding, where each of the wave winding coils is wound into a next corresponding stator slot member. However, it is pointed out that the present disclosure does not depend on a particular winding coil arrangement 50.

The winding coil arrangement 50 is supported by the stator slots 38 formed between the mechanically coupled stator teeth 30 on the outer surface 23 of the stator tube 20. A final state of the winding coil arrangement 50 is illustrated in Fig. 2 (f). In this state, three winding layers 52, 53, 54 are formed at the first side 21 and on the second side 22 (not visible). The ends 55, 56 of wave winding coils 51 are provided from the first side 21 of the stator tube 20 and extend in axial direction A.

The method now further, as illustrated in Fig. 2 (g) and 2 (h) includes mechanically coupling S400 a stator back yoke 60 with the plurality of stator teeth 30 to surround the stator tube 20 and to enclose the winding coil arrangement 50.

As illustrated in Fig. 2 (g), the stator back yoke 60 is slid onto the stator teeth 30 from the first side 21. In other embodiments, the stator back yoke 60 may be slid on the stator teeth 30 from the second side 22. In particular, the back yoke 60 is slid over the ends 55, 56 of the wave winding coils 51 which are axially protruding from the stator 10.

As illustrated in Fig. 4 (coupled state), the stator back yoke 60 includes a plurality of coupling protrusions 62 protruding to a central axis C along a circumference of the stator back yoke 60. The coupling protrusions 62 extend in axial direction A.

The mechanical coupling S400 of the stator back yoke 60 includes a sliding of the stator back yoke 60 in axial direction A while the coupling protrusions 62 are overlapping the stator slots 38 formed between the stator teeth 30 in the sliding. This can be seen in Fig. 4 (coupled state), where the upper portion of the stator slots 38 is occupied by the coupling protrusions 62. Thus, the stator slots 38 act as guidance in the coupling process when sliding the back yoke 60 onto the stator teeth 30.

In particular, as can be seen in Figs. 3 and Fig. 4, each of the stator teeth 30 includes an indented coupling groove 34 on both side surfaces 35, 36 of a top portion 37 of each stator tooth 30. The indented coupling grooves 34 extend in axial direction A.

Thus, the mechanical coupling S400 of the stator back yoke 60 includes mechanically fitting or interlocking the coupling protrusions 62 in indented coupling grooves 34 of two neighboring stator teeth 30 during the sliding. Thus, each coupling protrusion 62 is supported by two neighboring stator teeth 30. The indented coupling groove 34 includes a corresponding shape to receive or to fit the coupling protrusion 34 therein. In this way as described above, a stable fixation of the stator back yoke may be provided by the plurality of stator teeth, wherein each of the coupling protrusions is supported and fits by two teeth and the grooves therein.

Thus, an interlocking of the stator back yoke to the stator teeth is achieved. Due to the fitting of coupling protrusions 62 and indented coupling grooves 34, a friction coupling is provided along the entire axial length after the sliding is completed securing the stator back yoke 60 on the plurality of stator teeth 30. The final state of the mechanical coupling of the stator back yoke 60 is shown in Fig. 2 (h) to arrive at the stator 10.

Further, as shown in Fig. 2 (i), depending on the number wave winding coils involved, the method may include leading out the first ends 55 and the respective second ends 56 of the wave winding coils 55. In the preset case, 18 first ends 55 with corresponding second ends 56 are provided. The second ends 56 may be connected to a corresponding neutral phase 57 for star connection.

The method may further include a step of cooling the stator back yoke 60 before mechanically coupling S400 a stator back yoke 60 with the plurality of stator teeth 30. This can be used for improving the coupling strength. In particular, when being in the final position, the process of thermal equilibration may lead to an additional arresting force of the stator back yoke 60 due to thermal expansion while in the coupled state on the stator teeth 30.

In a further embodiment, here not explicitly shown, the method can also include the step of removing the stator tube 20 after mechanically coupling of the stator back yoke 60 to the plurality of stator teeth 30 by sliding the stator tube 20 in axial direction A. Thus, in this embodiment, the stator tube 20 only acts as an auxiliary tube to fixate the stator teeth 30 and once the stator back yoke 60 is coupled, it can be removed. In this way, a stator 10 with open stator slots 38 to the interior and with reduced weight and more internal space, e.g., to receive a rotor, is eventually provided.

Referring to Figs. 3 to 5, a stator 10 for an electrical machine 100 is provided. The stator 10 includes a stator tube 20 defining a central axis C and including a first side 21 and a second side 22 axially displaced from each other.

The stator 10 includes a plurality of stator teeth 30. Each of the stator teeth 30, see Fig. 5, are mechanically coupled to an outer surface 23 of the stator tube 20 along a circumference 24 of the stator tube 20. Thereby, each of the stator teeth 30 extends from the first side 21 to the second side 22 of the stator tube 20 to define stator slots 38 between each neighboring stator teeth 30. Since the stator teeth 30 are individually coupled, the buckling phenomenon is eliminated.

In more details, as illustrated in Fig. 5, the stator tube 20 includes a plurality of coupling grooves 25 along a circumference 24 of the stator tube 20. Each coupling groove 25 extends in the axial direction A from the first side 21 to the second side 22. Each of the stator teeth 30 includes a coupling tail 31 at a bottom portion 33 of the stator teeth 30. The coupling tails 31 are as well extending in the axial direction A. The coupling tails 31 of each stator tooth 30 mechanically interlock in a corresponding coupling groove 25. The coupling tails 31 may include a widening portion 32 that widens in direction of the central axis C. The coupling groove 25 may have a corresponding shape which corresponds to the shape of the coupling tail 31 to receive and interlock the coupling tail 31. Thus, the coupling groove 25 may include a widening portion 27 that widens in direction if the central axis C. Due to the fitting of axially extending coupling tail 31 and coupling groove 25 over the axial length, a friction coupling is provided securing the stator teeth 30 at the outer surface 23.

In particular, the coupling tail 31 may have a trapezoidal shape at the bottom portion 33 thereof and the coupling groove 25 has a trapezoidal shape corresponding to the shape of the coupling tail 31, so that the coupling tail 31 mechanically interlocks the coupling groove 25. In other words, the widening portions 27, 32 mechanically fit or interlock with each other.

Referring to Fig. 3, a winding coil arrangement 50 is wound along the circumference 24 of the stator tube 20. The winding coil arrangement 50 is supported by stator slots 38 formed between the stator teeth 30 on the outer surface 23 of the stator tube 20.

The winding coil arrangement 50 may include a plurality of wave winding coils 51. For example, in the present case, 18 wave winding coils 51 are provided. First ends 55 of the wave winding coils 51 may provide connectors to connect the winding coil arrangement 50 with power electronics 70 to operate the stator 10 as part of an electrical machine 100. Second ends 56 of the wave winding coils 51 may be connected to a neutral phase 57 to provide a star connection. On the first side 21 (and on the second side 22, here not shown), the winding coil arrangement 50 includes three winding layers 52, 53, 54 to provide the winding coil arrangement 50.

The winding layers 52, 53, 54 at the first side 21 are partially supported by a conical tip portion 26 of the stator tube 20 extending in axial direction A. The conical tip portion 26 may extend in axial direction A in tapered manner. This is also shown in Fig. 2 (a) - (c) for example. Due to the support by the conical tip portion 26 an improved installation process is enabled and (central) axial space secured.

The plurality of connectors 55 lead out from an outer diameter 58, indicated in Fig. 3, of the wave winding coil arrangement 50. Thus, since the wave winding arrangement is provided from the outside before the stator back yoke 60 is coupled thereto, the connectors 55 can be provided from an outer diameter 58 instead of from an inner diameter in case of when the wave winding coil arrangement is installed from the inside. Thus, due to the winding installation from the outside, a more space efficient lead out arrangement can be provided with reduced axial space requirements.

The stator 10 in this particular case comprises 18 wave winding coils 51 that can be grouped to 6 electric 3-phase lanes, of which groups of three may be operated synchronously, and where the two groups are operated none-synchronously, shifted 30 electrical degrees, to achieve a geometrically 6-phase electric machine. However, the present invention does not depend on a particular 6-phase electrical machine and the above is only an example of a winding coil arrangement. For example, also a 3-phase electrical machine may be provided.

Referring to Figs. 3 and 4, the stator back yoke 60 is mechanically coupled with the stator teeth 30 to surround the stator tube 20 and to enclose the winding coil arrangement 50.

The stator back yoke 60 includes a plurality of coupling protrusions 62. The plurality of coupling protrusions 62 are protruding to a central axis along a circumference of the stator back yoke 60. As shown in Fig. 4, the coupling protrusions 62 are overlapping and are partially received by the stator slots 38 formed between the stator teeth 30. Thus, the free space of the stator slots 38 is used for the coupling protrusions 62 to be at least partially seated or aligned therein which may ease the coupling process and the alignment of the stator back yoke 60 and the plurality of stator teeth 30.

In more detail, each of the stator teeth 30 include an indented coupling groove 34 on both side surfaces 35, 36 of a top portion 37 of each stator tooth 30 as shown in Figs. 4 and 5. The indented coupling groove 34 extends in axial direction A. Each coupling protrusion 62 mechanically interlocks with indented coupling groove 34 of two neighboring stator teeth 30. In other words, the coupling protrusion 62 mechanically fits with the indented coupling groove 34. In this manner, each of the coupling protrusions 62 is supported and interlocked by two neighboring stator teeth 30 and the indented coupling grooves 34 therein. Due to the interlocking or fitting of coupling protrusions 62 and indented coupling grooves 34 along axial direction A, a friction coupling is provided to secure the stator back yoke 60 on the plurality of stator teeth 30. Thus, an effective and stable coupling of the stator back yoke 60 is achieved.

In more detail, the coupling protrusions 62 may include a widening portion 64. For example, the coupling protrusions 62 may include a trapezoidal shape when viewed in axial direction A. The indented coupling groove 34 may include a corresponding shape to mechanically fit the coupling protrusion 62 therein. Thus, a stable fixation is reached.

Further, the stator 10 as described above in various embodiments may be part of an electrical machine 100 which includes the stator 10 according to any of the above embodiments. In addition, power electronics 70 may be connected to the connectors 55 of the stator 10. A rotor, here not shown, is coaxially surrounded by the stator 10 and can be rotated around the central axis c in operation. An air gap, here not visible, is formed between the rotor and the stator 10 in the electrical machine 100.

In summary, a stator 10 and a manufacturing process is provided that prevents buckling which is achieved since each of the stator teeth 30 are individually and mechanically coupled to the stator tube 20 so to be fixed to the stator tube 20 in good manner. Thus, wall thickness of the stator tube 20 can be reduced and power density increased. In addition, since the stator back yoke 60 is coupled after the winding coil arrangement is completed, the wave winding coil arrangement 50 can be installed from the outside which eases the winding installation and enables automized/robotized installation. Particular coupling mechanisms are provided that strengthen the interlocking of the parts.

### Reference signs

- 10: stator
- 20: stator tube
- 21: first side
- 22: second side
- 23: outer surface
- 24: circumference
- 25: coupling groove
- 26: conical tip portion
- 27: widening portion
- 28: stoppage protrusion

- 30: stator tooth
- 31: coupling tail
- 32: widening portion
- 33: bottom portion
- 34: indented coupling groove
- 35/36: side surface
- 37: top portion
- 38: stator slot

- 50: winding coil arrangement
- 51: wave winding coil
- 52: winding layer
- 53: winding layer
- 54: winding layer

- 55: first end (connector)
- 56: second end (neutral phase)
- 57: neutral phase
- 58: outer diameter

- 60: stator back yoke
- 62: coupling protrusion
- 64: widening portion

- C: central axis
- A: axial direction

- 100: electrical machine

- S100: providing a stator tube
- S200: mechanically coupling stator teeth
- S300: installing winding coil arrangement
- S400: mechanically coupling stator back yoke

## Claims

1. A method of manufacturing a stator (10) for an electrical machine (100), wherein the method comprises the steps of:
providing (S100) a stator tube (20) defining a central axis (c) and including a first side (21) and a second side (22) axially displaced from each other;
mechanically coupling (S200) each of a plurality of stator teeth (30) to an outer surface (23) of the stator tube (20) along a circumference (24) of the stator tube (20), wherein each of the stator teeth (30) extends from the first side (21) to the second side (22) of the stator tube (20) to define stator slots (38) between each neighboring stator teeth (30) that are outwardly open;
installing (S300), from the outside, a winding coil arrangement (50) along the circumference (24) of the stator tube (20) and support the winding coil arrangement (50) by the stator slots (38) formed between the mechanically coupled stator teeth (30) on the outer surface (23) of the stator tube (20); and
mechanically coupling (S400) a stator back yoke (60) with the plurality of stator teeth (30) to surround the stator tube (20) and to enclose the winding coil arrangement (50).

2. The method of claim 1, wherein:
the stator tube (20) includes a plurality of coupling grooves (25) along the circumference (24) of the stator tube (20), wherein each coupling groove (25) extends in an axial direction (A) between the first side (21) and the second side (22),
each of the stator teeth (30) includes a coupling tail (31) at a bottom portion (33) of the stator tooth (30) and extending in the axial direction (A),
wherein the step of mechanically coupling (S200) of the stator teeth (30) to the outer surface (23) of the stator tube (20) includes sliding of each of the stator teeth (30) along the axial direction (A) while the coupling tail (31) fits in a corresponding coupling groove (25) during the sliding until the stator teeth (30) extend from the first side (21) to the second side (22) of the stator tube (20).

3. The method of claim 2, wherein each the coupling grooves (25) include stoppage protrusion (28) at a groove end.

4. The method of one of the claims 1 to 3, wherein the stator back yoke (60) includes a plurality of coupling protrusions (62) along a circumference of the stator back yoke (60) protruding to a central axis (c) of the stator back yoke (60) and extending in axial direction of the stator back yoke (60), wherein the mechanical coupling (S400) of the stator back yoke (60) includes a sliding of the stator back yoke (60) in axial direction (A) while the coupling protrusions (62) are overlapping the stator slots (38) formed between the stator teeth (30) in the sliding until the stator back yoke (60) surrounds the stator teeth (30).

5. The method of claim 4, wherein each of the stator teeth (30) include an indented coupling groove (34) on both side surfaces (35, 36) of a top portion (37) of each stator tooth (30) extending in axial direction (A), wherein the mechanical coupling (S400) of the stator back yoke (60) includes fitting each of the coupling protrusions (62) in indented coupling grooves (34) of two neighboring stator teeth (30) during the sliding until the stator back yoke (60) surrounds the stator teeth (30).

6. The method of one of the claims 1 to 5, wherein the method includes a step of cooling the stator back yoke (60) before the step of mechanically coupling (S400) the stator back yoke (60) with the plurality of stator teeth (30).

7. The method of one of the claims 1 to 6, further including the step of removing the stator tube (20) after mechanically coupling of the stator back yoke (60) to the plurality of stator teeth (30) by axial sliding of the stator tube (20).

8. A stator (10) for an electrical machine, comprising:
a stator tube (20) defining a central axis (c) and including a first side (21) and a second side (22) axially displaced from each other;
a plurality of stator teeth (30) mechanically coupled to an outer surface (23) of the stator tube (20) along a circumference (24) of the stator tube (20), wherein each of the stator teeth (30) extends from the first side (21) to the second side (22) of the stator tube (20) to define stator slots (38) between each neighboring stator teeth (30);
a winding coil arrangement (50) wound along the circumference (24) of the stator tube (20) and supported by stator slots (38) formed between the stator teeth (30) on the outer surface (23) of the stator tube (20); and
a stator back yoke (60) mechanically coupled with the stator teeth (30) to surround the stator tube (20) and to enclose the winding coil arrangement (50).

9. The stator (10) of claim 8, wherein:
the stator tube (20) includes a plurality of coupling grooves (25) along a circumference (24) of the stator tube (20), wherein each coupling groove (25) extends in the axial direction (A) from the first side (21) to the second side (22),
each of the stator teeth (30) includes a coupling tail (31) at a bottom portion (33) of the stator teeth (30) extending in the axial direction (A),
wherein the coupling teeth (31) of each stator tooth (30) is interlocked in a corresponding coupling groove (25).

10. The stator (10) of one of the claims 8 to 9, wherein each the coupling grooves (25) include a stoppage protrusion (28) at a groove end.

11. The stator (10) of one of the claims 9 to 10, wherein the coupling tail (31) and the coupling groove (25) each include a widening portion (27, 32) toward the central axis (c) which mechanically interlock with each other.

12. The stator (10) of one of the claims 8 to 11, wherein the stator back yoke (60) includes a plurality of coupling protrusions (62) along a circumference of the stator back yoke (60) protruding to a central axis of the stator back yoke (60) and extending in axial direction (A), wherein the coupling protrusions (62) are overlapping the stator slots (38) formed between the stator teeth (30).

13. The stator (10) of one of the claims 8 to 12, wherein each of the stator teeth (30) include an indented coupling groove (34) on both side surfaces (35, 36) of a top portion (37) of each stator tooth (30) extending in axial direction (A), wherein each coupling protrusion (62) mechanically interlock with indented coupling grooves (34) of two neighboring stator teeth (30).

14. An electrical machine (100), including a stator (10) according to one of the claims 7 to 13.

15. An aircraft comprising the electric machine (100) according to claim 14.
